# EUROPEAN PATENT APPLICATION

(11) **EP 1 566 714 A1**
(43) Date of publication of application: **24.08.2005**
(21) Application number: 03775891.9
(22) Date of filing: 26.11.2003
(51) Int. Cl.: G05B 19/418

(54) **PRODUCTION PLAN MANAGEMENT SYSTEM**

(30) Priority: 29.11.2002 JP 2002348583
(71) Applicant: HONDA MOTOR CO., Ltd., Tokyo 107-8556 (JP)
(72) Inventor: MATSUMOTO, Masaki, Minato-ku, Tokyo 107-8556 (JP); SHIMIZU, Nobuyuki, Ueda-shi, Nagano 386-0016 (JP)
(74) Representative: Donné, Eddy
(86) International application number: PCT/JP2003/015073
(87) International publication number: WO 2004/051384

(57) **Abstract**

The invention greatly reduces remaining orders, and suppresses delays in deliveries to customers.

Received-order information for a part is registered in a received-order D/B 20 and shipping-record information is registered in a shipping-record D/B 30, and the production-plan-creation-function unit 12 of the production-plan-management apparatus 10 creates a production order that gives a production plan list based on the received-order information in the received-order D/B 20, and creates a corrected-production order that gives a corrected-production-plan list based on changes in the specified delivery date for delivery to the customer. Also, after shipping-record information for a part has been registered in the shipping-record D/B 30 based on the production order and corrected-production order, the comparison-function unit 13 obtains and compares information for the same part from the shipping-record information and received-order information, and then the additional-production-order-issuing-function unit 14 calculates the comparison result, and issues an additional production order for a part that has no shipping record when the number of received orders is greater than the number of shipping records.

## Description

### BACKGROUND OF THE INVENTION

### Field of the Invention

This invention relates particularly to a production plan management system that can be applied to the management of the production plan of parts for which there is little distribution of raw materials, and whose delivery is easily affected by the delivery schedule of the raw materials (or in other words, when there is a long wait for raw materials).

### Description of the Related Art

In the case of a brake, which is one part that is assembled in an automobile, there is a long wait for raw materials such as the friction pad or shoe that are made of friction materials. In the case of this kind of part, the production plan or shipping plan of a part for which an order has been received is often changed due to being affected by the delivery schedule of raw materials.

In other words, after the producers of a part receive an order for the part from a customer, they draw up a production plan according to the desires of the customer, and immediately have the supplier of the raw materials (materials manufacturer) check their delivery capacity, however, when the order is over the delivery capacity, the delivery schedule from the supplier of the raw materials may change. In this case, the parts producer must ask the customer to change their desired delivery date according to the delivery schedule of the raw materials, and the production order based on the original order is modified to correspond with the changed request. After that, production of the part is started for the production plan based on the delivery schedule of raw materials.

Here, depending on the part, there are cases when the original production plan must be put off to the next month or the month following the next month due to changes in the delivery schedule from the supplier of raw materials (materials manufacturer). In this case, the customer complies with the changes in the delivery date, however, since every month there is an irregular order, the customer may cancel an ordered part and not reorder to the changed month.

Related to this, in Japanese patent publication 2002-140110, a method is proposed for a product made of a plurality of parts in which it is possible to shorten the lead time from the time of the order to the time of the deadline, in order to be able to deliver the parts with no wastes time. In this method there is a first identifier that is defined based on the scheduled production date of the product, a second identifier that indicates how long before the scheduled production date of the product that the delivery period of each part is, forecast information that indicates the scheduled quantity of the product to be produced, and delivery information that indicates the number of parts to be delivered; and when there is a change in the product order (forecast), it is possible to manage the relationship of the parts necessary for that change according to the information described above.

However, in Japanese patent publication 2002-140110, the capability of managing the relationship of the necessary parts according to the information described above when there is a change in the product order (forecast) is just for managing the relationship of the necessary parts, and it is not possible to perform management for modifying the production order of the original production plan according to the changes in the customer's desired delivery date due to changes in the delivery schedule of the raw materials.

Also, since there is no system for automatically modifying the production order of the original production plan to meet the request to the customer to change the desired delivery date, it is possible that production for the part of the original production plan that was postponed to the next month or the month after the next month due to changes in the delivery schedule from the supplier of raw materials (materials manufacturer) may be forgotten. In this case, the order of parts from the customer becomes a remaining order in the data.

Also, regardless of whether the raw materials have already been delivered, when the production for the part of the original production plan that was postponed to the next month or the month after the next month is forgotten, delivery to the customer is greatly delayed, and as a result, trust is lost.

This invention takes into consideration the conditions described above, and provides a production plan management system that is capable of greatly reducing remaining orders, and suppressing delays in delivering to the customer.

### DISCLOSURE OF INVENTION

The production plan management system of this invention comprises: a received-order database in which received-order information that contains the number of orders for parts from a customer is registered; a shipping-record database in which shipping-record information that indicates the number of shipping records for the parts is registered; and a production plan-management apparatus that manages the production plans for parts based on the received-order information and shipping-record information.

Also, it is possible for the production-plan-management apparatus to comprise: a production-plan-creation-function unit that creates a production order that gives a production plan list based on a received-order information, and creates a corrected-production plan that gives a corrected-production plan list based on a changed specified delivery date when the specified delivery date for delivery to the customer is changed; and a comparison-function unit that obtains and compares information for the same part from the received-order information registered in the received-order database and the registered shipping-record information, after shipping-record information for a part that is produced based on the production order and corrected-production order is registered in the shipping-record database.

Also, it is possible for an additional-production-order-issuing-function unit to calculate the comparison result from the comparison-function unit, and to issue an additional-production order for a part that has no shipping record when the number of received orders is greater than the number of shipping records.

Also, it is possible for the parts to be the friction pads and shoes of a brake part that require friction material.

The production plan management method of this invention comprises: a process of registering received-order information that contains the number of orders for parts from a customer; a process of registering shipping-record information that indicates the number of shipping records for the parts; and a process of managing the production plans for parts based on the received-order information and shipping-record information.

Also, it is possible to have a process of creating a production order that gives a production plan list based on a received-order information, and creating a corrected-production plan that gives a corrected-production plan list based on a changed specified delivery date when the specified delivery date for delivery to the customer is changed; and a process of obtaining and comparing information for the same part from the received-order information and the registered shipping-record information, after shipping-record information for a part that is produced based on the production order and corrected-production order is registered.

Also, it is possible to have a process of calculating the comparison result, and issuing an additional-production order for a part that has no shipping record when the number of received orders is greater than the number of shipping records.

Also, it is possible for the parts to be the friction pads and shoes of a brake part that require friction material.

In the production plan management system of this invention, received-order information, which contains the number of orders from a customer for a part for which there is a long wait for raw materials, is registered in a received-order database; shipping-record information, which indicates the number of shipping records for a part, is registered in a shipping-record database, and the production-plan-management apparatus manages the production plan for a part based on the received-order information registered in the received-order database and shipping-record information registered in the shipping-record database.

### BRIEF DESCRIPTION OF THE DRAWINGS

Fig. 1 is a drawing showing an embodiment of the production plan management system of this invention.
Fig. 2 is a flowchart for explaining the production plan management method of the production plan management system shown in Fig. 1.
Fig. 3 is a flowchart for explaining the production plan management method of the production plan management system shown in Fig. 1.

### DESCRIPTION OF THE PREFERRED EMBODIMENTS

The preferred embodiments of the invention will be explained below.

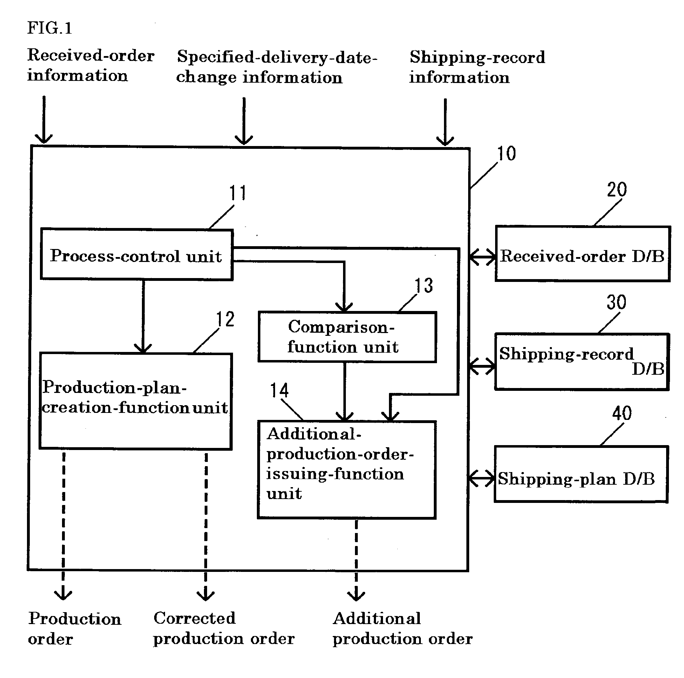

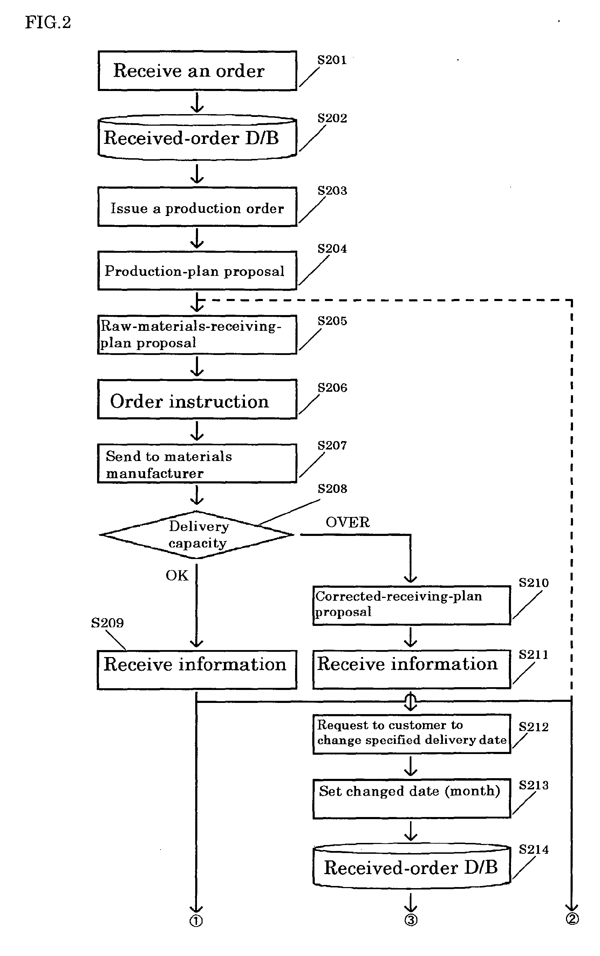

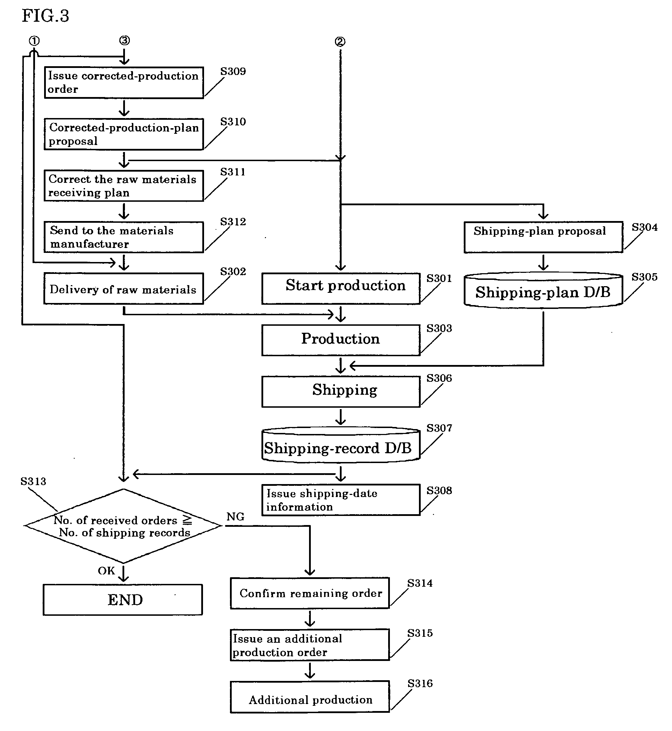

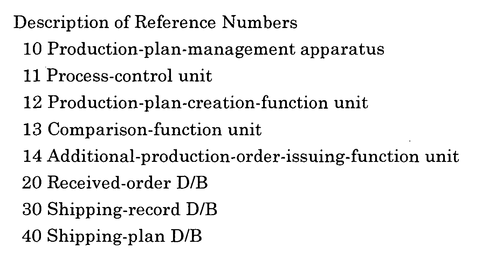

Fig. 1 is a drawing showing an embodiment of the production plan management system of this invention, and Fig. 2 and Fig. 3 are drawings for explaining the production plan management method of the production plan management system shown in Fig. 1.

The production plan management system shown in Fig. 1 particularly performs management of the production plan of parts for which there is little distribution of raw materials, and whose delivery is easily affected by the delivery schedule of the raw materials (or in other words, when there is a long wait for raw materials), and comprises: a production-plan-management apparatus 10, a received-order D/B (database) 20, and a shipping-record D/B (database) 30. The reference number 40 is a shipping-plan D/B in which information for the shipping plan set by the shipping-plan proposal is registered. Here, the raw material is taken to be the friction material needed for the friction pads and shoes in a brake part, for example, which is one part assembled in an automobile.

The production-plan-management apparatus 10 is an apparatus that manages the production plan for parts that have been ordered by the customer according to the specified delivery date for delivery to the customer, and it comprises: a process-control unit 11, production-plan-creation-function unit 12, comparison-function unit 13 and additional-production-order-issuing-function unit 14.

The process-control unit 11 registers the received-order information and specified-delivery-date-change information in the received-order D/B 20, registers the shipping-record information in the shipping-record D/B 30, and controls the operation of the production-plan-creation-function unit 12, comparison-function unit 13 and additional-production-order-issuing-function unit 14.

The production-plan-creation-function unit 12 creates a production order that gives a production plan list based on the received-order information registered in the received-order D/B 20. Also, the production-plan-creation-function unit 12 creates a corrected-production order that gives a corrected production plan list based on the changed specified delivery date when the specified delivery date for delivery to the customer is changed. Furthermore, the production-plan-creation-function unit 12 executes the product-plan proposal and raw-material-receiving-plan proposal, and has a function for outputting instructions to order raw materials and a function for executing the shipping-plan proposal.

When shipping-record information for a part produced based on the production order and corrected production is registered in the shipping-record D/B 30, the comparison-function unit 13 obtains and compares the received-order information registered in the received-order D/B 20 and the shipping-record information registered in the shipping-record D/B 30 for the same part. The additional-production-order-issuing-function unit 14 calculates the comparison result from the comparison-function unit 13, and when the number of received orders is greater than the number of shipping orders, it issues an additional-production order for the part not included in the shipping record. In other words, when an additional-production order is issued, it is possible to know that there is a remaining order. Received-order information and specified-delivery-date-change information, which indicates that the specified date for delivery to the customer has been changed, are registered in the received-order D/B 20. Shipping-record information for parts produced based on the production order and corrected-production order is stored in the shipping-record D/B 30. The received-order information, specified-delivery-date-change information and shipping-record information described above can be input to the production-plan-management apparatus 10 from an input apparatus (not shown in the figure) such as a keyboard, touch panel or the like.

The production plan management method of the production plan management system constructed as described above is as follows. First, the case of when there is no change in the delivery schedule for raw materials from the raw materials supplier (materials manufacturer) and no change in the specified delivery date for delivery to the customer will be explained.

As shown in Fig. 2, when an order for a part is received from a customer, the process-control unit 11 registers that received-order information in the received-order D/B 20 (steps 201, 202). Here, the received-order information that is registered in the received-order D/B 20 is the customer's name, part name, ordered quantity, and desired delivery date.

After received-order information is registered in the received-order D/B 20, the production-plan-creation-function unit 12 issues a production order based on the received-order information that is registered in the received-order D/B 20 (step 203). Also, the production-plan-creation-function unit 12 executes the production-plan proposal and raw-materials-receiving-plan proposal and outputs an instruction to order raw materials based on these proposals (steps 204 to 206).

Also, the part producer sends an order instruction to the raw-materials supplier (materials manufacturer) (step 207). This order instruction can be sent by Fax, E-mail or the like. Here, the producer will have the raw-materials supplier (materials manufacturer) check its delivery capacity (step 208), and when information is received by Fax or E-mail that the delivery capacity is OK (step 209), production starts (step 301) as shown in Fig. 3, and when the raw materials are delivered, the part is produced (steps 302, 303). Also, here, before production begins, the production-plan-creation-function unit 12 executes the shipping-plan proposal based on the production-plan proposal and the raw-materials-receiving-plan proposal, and registers that shipping-plan proposal in the shipping-plan D/B 40 (steps 304, 305).

After the production in step 303 is completed and the parts are shipped to the customer, that shipping-record information is registered in the shipping-record D/B 30 (steps 306, 307), and after that, the shipping-date information is issued (step 308). This shipping-date information can also be issued by the production-plan-creation-function unit 12. Above, was the case of when there is no change in the delivery schedule for raw materials from the raw materials supplier (materials manufacturer) and no change in the specified delivery date for delivery to the customer.

Next, the case of when there is a change in the delivery schedule for raw materials from the raw materials supplier (materials manufacturer) and a change in the specified delivery date for delivery to the customer due to that change will be explained.

First, in step 208 in Fig. 2, the result of having the raw-materials supplier (materials manufacturer) check its delivery capacity is that it is 'Over' its delivery capacity, and when information of a corrected-receiving-plan proposal for that is received, the parts producer outputs a specified-delivery-date-change request to the customer by telephone, Fax, E-mail or the like (steps 210 to 212). Also, when the change in the specified delivery date is approved, the process-control unit 11 registers that specified-delivery-date-change information in the received order D/B 20 (steps 213, 214).

After the specified-delivery-date-change information is registered in the received-order D/B 20, the production-plan-creation-function unit 12 issues a corrected production order based on that specified-delivery-date-change information as shown in Fig. 3 (step 309). Also, after the corrected version of the production-plan proposal is executed based on the issued corrected-production order (step 310), production begins (step 301). At this time, the raw-materials-receiving plan is corrected based on the corrected production-plan proposal, and that corrected raw-materials-receiving plan is sent to the raw-materials supplier (material manufacturer) by Fax, E-mail or the like (steps 311, 312). After the raw materials are delivered, the parts are produced (steps 302, 303), after that the process described above is executed (step 304 to step 308).

Here, after the shipping-record information in step 307 is registered in the shipping-record D/B 30, the comparison-function unit 13 obtains and compares the shipping-record information registered in the shipping-record D/B 30 and the received-order information registered in the received-order D/B 20 for the same part (step 313). Next, the additional-production-order-issuing-function unit 14 calculates the result of comparison by the comparison-function unit 13, and when the number of received orders is greater than or equal to the number of shipping records, the part from the received-order D/B 20 that is not in the shipping record is confirmed as a remaining order (step 314). In this case, the additional-production-order-issuing-function unit 14. executes the additional-production order for the part of the remaining order, and executes the additional production (steps 315, 316).

In this embodiment, received-order information, which contains the number of orders from the customer for parts for which there is a long wait for raw materials, is registered in the received-order D/B 20, shipping-record information, which indicates the number of shipping records for parts, is registered in the shipping-record D/B 30, and the production-plan-creation-function unit 12 of the production-plan-management apparatus 10 creates a production order that gives a production plan list based on the received-order information registered in the received-order D/B 20, and creates a corrected-production order that gives a corrected production-plan list based on a change in the specified delivery date when there is a change in the specified delivery date for delivery to the customer. Also, after the shipping-record information for a part based on the production order and corrected-production order is registered in the shipping-record D/B 30, and the comparison-function unit 13 obtains and compares the shipping-record information registered in the shipping-record D/B 30 and the received-order information registered in the received-order D/B 20 for the same part, the additional-production-order-issuing-function unit 14 calculates the comparison result by the comparison-function unit 13, and when the number of received orders is greater than the number of shipping records, it issues an additional-production order for the part for which there is no shipping record. In this way, it is possible to easily know that there is a remaining order, and production for the part of the original production plan that was postponed to the next month or the month after the next month when over the capacity for delivering raw materials is not forgotten, so it is possible to greatly reduce remaining orders. Also, even when production according to the original production plan is not performed even though the raw materials have been delivered, it is possible to know from the issued additional-production order that there is a remaining order, and so it is possible to immediately start production and suppress a delay in delivery to the customer.

### Industrial Applicability

As explained above, with the production plan management system of this invention, received-order information, which contains the number of orders from the customer for parts, is registered in the received-order database, shipping-record information, which indicates the number of shipping records for parts, is registered in the shipping-record database, and the production-plan-management apparatus manages the production plan for a part based on the received-order information registered in the received-order database, and the shipping-record information registered in the shipping-record database, so it is possible to greatly reduce remaining orders, and thus it is possible to suppress delays in deliveries to the customer. This invention is particularly suitable for parts for which there is little distribution of raw materials, and whose delivery is easily affected by the delivery schedule of the raw materials (or in other words, when there is a long wait for raw materials), for example in a system for managing the production plan for friction pads and shoes of a brake part that uses friction material.

## Claims

1. A production plan management system comprising:
a received-order database in which received-order information that contains the number of orders for parts from a customer is registered;
a shipping-record database in which shipping-record information that indicates the number of shipping records for said parts is registered; and
a production-plan-management apparatus that manages the production plan for parts based on said received-order information and said shipping-record information.

2. The production plan management system of claim 1 wherein
said production-plan-management apparatus comprises:
a production-plan-creation-function unit that creates a corrected-production plan that gives a corrected-production plan list based on a changed specified delivery date when said specified delivery date for delivery to said customer is changed; and
a comparison-function unit that obtains and compares information for the same part from the received-order information registered in said received-order database and said registered shipping-record information, after shipping-record information for a part that is produced based on said production order and corrected-production order is registered in said shipping-record database.

3. The production plan management system of claim 2 further comprising
an additional-production-order-issuing-function unit that calculates the comparison result from said comparison-function unit, and issues an additional-production order for a part that has no shipping record when the number of said received orders is greater than the number of shipping records.

4. The production plan management system of any of the claims 1 to 3 wherein said parts are the friction pads and shoes of a brake part that require friction material.

5. A production plan management method comprising:
a process of registering received-order information that contains the number of orders for parts from a customer;
a process of registering shipping-record information that indicates the number of shipping records for said parts; and
a process of managing the production plans for parts based on said received-order information and said shipping-record information.

6. The production plan management method of claim 5 comprising:
a process of creating a production order that gives a production plan list based on said received-order information, and creating a corrected-production plan that gives a corrected-production plan list based on a changed specified delivery date when said specified delivery date for delivery to said customer is changed; and
a process of obtaining and comparing information for the same part from said received-order information and said registered shipping-record information, after shipping-record information for a part that is produced based on said production order and corrected-production order is registered.

7. The production plan management method of claim 6 comprising a process of calculating said comparison result, and issuing an additional-production order for a part that has no shipping record when the number of said received orders is greater than the number of shipping records.

8. The production plan management system of any of the claims 5 to 7 wherein said parts are the friction pads and shoes of a brake part that require friction material.
